# EUROPEAN PATENT SPECIFICATION

(11) **EP 2 547 013 B1**
(45) Date of publication and mention of the grant of the patent: **28.01.2015**
(21) Application number: 12006980.2
(22) Date of filing: 04.02.2005
(51) Int. Cl.: H04B 17/00

(54) **Radio wave propagation simulator**
Radiowellenausbreitungssimulator
Simulateur de la propagation d'ondes radio

(30) Priority: 06.02.2004 JP 2004031100
(43) Date of publication of application: 16.01.2013
(62) Divisional of application: 05002357.1
(73) Proprietor: NEC Corporation, Minato-ku Tokyo (JP)
(72) Inventor: Ohashi, Kazunori, Tokyo (JP)
(74) Representative: Samson & Partner

(56) References cited:
- WO-A1-03/005752
- Qingyu Miao: "An Investigation of Channel Access with Measurement Error in the CDMA System", Internet IEEE APCCAS 2000, 4 December 2000 (2000-12-04), pages 251-254, XP002638103, Tianjin, China ISBN: 0-7803-6253-5 Retrieved from the Internet: URL:http://ieeexplore.ieee.org/stamp/stamp .jsp?tp=&arnumber=913481&isnumber=19718 [retrieved on 2011-05-20]

## Description

### BACKGROUND OF THE INVENTION

### 1. Field of Invention:

The present invention relates to a mobile communication system in compliance with the code division multiple access (hereinafter referred to as CDMA) standards, and particularly to a radio wave propagation simulator well usable for radio area tuning intended for improving a communication quality within a radio service area.

### 2. Description of the Related Art:

In a mobile communication system, radio base stations are distributed (designing a mobile communication system) so as to provide a continuous radio service area to retain a ceaseless communication service for a moving user terminal (mobile station). In addition, in order to prevent occurrence of the places unable to receive a radio wave, or the places where a communication quality is significantly deteriorated on account of the influence of the surrounding environments (topography and buildings), the radio area tuning has been performed for tuning a variety of radio parameters of a radio base station (an antenna tilt angle, an antenna orientation, transmission power, etc.).

A radio wave propagation simulator for simulating the state of propagation of a radio wave under the influence of topography and buildings has been known as a means for evaluation of a design of a mobile communication system. The details of the examples of the configuration and processing of this radio wave propagation simulator are described, for example, in Japanese laid-open patent publication No. 2001-28570.

The known radio area tuning, on the other hand, has carried out the procedures of actually measuring RSCP (Received Signal Code Power) of a desired radio wave etc. on a predetermined route within a radio service area using measuring instruments mounted on a vehicle, investigating the measures for improving the communication qualities from the measured data, and changing varieties of the radio parameter settings of the base stations to comply with the result of investigation.

In a mobile communication system in the CDMA scheme, because a plurality of mobile stations and a radio base station communicate using the same frequency (carrier wave), the quality of communication is affected by the number of other mobile stations on communication and the positions of the mobile stations.

A problem encountered in the conventional radio area tuning, however, has been that the tuning simply adjusts varieties of the radio parameters of the radio base station such that the RSCP at any given point (position) within the radio service area exceeds a predetermined value, but makes no adjustment allowing for the levels of interferences caused by RF communications through other mobile stations.

Furthermore, as described above, the conventional radio area tuning has suffered from the problem that the analysis on the entire radio service area has been impossible, because the measures for improving the communication quality are investigated based on the measured data and thus the intended investigation is limited to the measurement route.

As an approach to the solution of the above problem, it can be intended to apply a radio wave propagation simulator for design and evaluation of a mobile communication system to the radio area tuning. By this approach, the simulation enables acquiring the RSCPs, the communication qualities, etc. at the points other than the measurement route. The conventional radio wave propagation simulator, however, has been unable to be effectively utilized for modification of the radio parameters and the evaluation after the modification, which are the inherent operations of the radio area tuning, because the simulation model in the conventional radio wave propagation simulator does not sufficiently reflect actual environments.

WO 03/005752 A1 invention relates to system and method of controlling radio resources allocated to a communication consisting in measuring the respective propagation channel parameters between the mobile terminal and several fixed emitters/receivers and transmitting report messages to a radio network controller, said messages indicating at least one part of the parameters measured. The radio network controller processes the report messages in order to determine an active set of fixed emitters/receivers in relation to the mobile terminal and to adjust the transmitting power of said emitters/receivers. The measurements involve, for each fixed emitter/receiver, the determination of a propagation profile including at least one propagation path associated with a respective energy of reception. The parameters indicated in the report messages for at least one receiver/emitter comprise data which are dependent on the energy distribution in the propagation profile and which are taken into account by the radio network controller.

### SUMMARY OF THE INVENTION

In view of the above problems, it is an object of the present invention to provide a radio wave propagation simulator capable of analysis and evaluation of an entire radio service area and well usable for the radio area tuning.

In order to attain the above object, a radio wave propagation simulator of the present invention obtains correction values of a propagation curve for respective predetermined orientations from the differences of the measured data of the received signal code power of a desired signal and the propagation curve, corrects the propagation curve through the use of the correction values, and simulates the state of propagation of said radio wave making use of the propagation curve after the correction, or making use of both the propagation curve after the correction and the data after assigning predetermined weights to the measured data of the received signal code power of a desired signal.

As a result, the accuracy of the propagation simulation is improved, and further, because it is enabled to confirm the improvement and deterioration of the received power density ratio within a band in the overall radio service area, a proper radio area tuning can be attained.

A radio wave propagation simulator of the present invention, in addition, calculates a relative value.on the basis of the difference between the calculated values of the received power density ratio within a band before and after the modification of the radio parameter settings; adds the relative value to the measured data of the received power density ratio within a band; and estimates the received power density ratio within a band after the modification of the radio parameter settings.

Accordingly, while the conventional measures did not allow estimation of the received power density ratio within a band regardless of existence of traffic, the present invention enables the estimation properly. Furthermore, by verifying the modification results of the radio parameter settings through the use of a distribution diagram, it become feasible easily to verify the effects of the radio area tuning. Still further, because the extraction of the deteriorated area of the communication quality, the modification of the radio parameter settings, the verification of the effects of the radio area tuning, etc., which are the operations for the radio area tuning, can be performed by means of the radio wave propagation simulator, the operating efficiency of the radio area tuning is boosted.

The above and other objects, features, and advantages of the present invention will become apparent from the following description with reference to the accompanying drawings which illustrate examples of the present invention.

### BRIEF DESCRIPTION OF THE DRAWINGS

Fig. 1 is a block diagram representing an example of the configuration of the radio wave propagation simulator according to the present invention;
Fig. 2 is a flow chart representing the procedures to extract the area of a deteriorated communication quality through the use of the radio wave propagation simulator represented in Fig. 1; and
Fig. 3 is a graph showing the distribution of the communication quality of the overall radio service area used for the evaluation of the radio-area tuning method according to the present invention.

### DETAILED EMBODIMENT OF THE PREFERRED EMBODIMENT

Explanation is next presented regarding the present invention with reference to drawings.

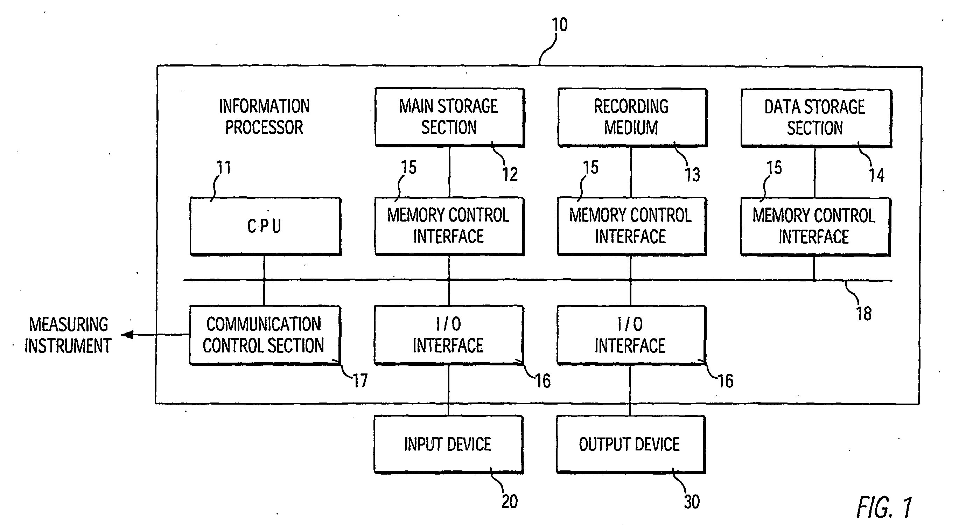

Fig. 1 illustrates a configuration example of the radio wave propagation simulator according to the present invention.

As shown in Fig. 1, the radio wave propagation simulator has a structure made up of an information-processing device, for example, a work station computer etc., constituted by information processor 10 that executes predetermined processes according to a program, input device 20 that provides commands, pieces of information, etc to information processor 10 and output device 30 for monitoring the processed results made by information processor 10.

Information processor 10 is structured comprising: CPU 11; main storage section 12 that temporarily stores the information required for the processes to be made by CPU 11; recording medium 13 that records the programs for CPU 11 to execute the below-described procedures required for evaluating the entire radio service area; data storage section 14 that stores the measured data, the data required for simulating radio wave propagation, etc.; memory control interfaces 15 that control data transfer with main storage section 12, recording medium 13 and data storage section 14; and I/O interfaces 16 that interfaces with input and output devices 20, 30, wherein the sections and interfaces are connected through bus 18. In addition, information processor 10 can include communication control section 17 that is an interface for controlling the data communication with a measuring instrument.

Information processor 10 executes the radio wave propagation simulation processing in accordance with a program stored in recording medium 13. For reference, recording medium 13 can be a magnetic disk, semiconductor memory, optical memory disk, or other recording media.

Explanation next regards the procedures of the radio wave area tuning of the present invention in the mobile communication system through the use of radio wave propagation simulator shown in Fig. 1.

In the radio area tuning of the present invention, the radio wave propagation simulation in a CPICH (Common Pilot Channel) is first implemented using a radio wave propagation simulator on the basis of design data and a radio wave propagation area (radio service area) is specified.

Next, a route for measuring the CPICH_RSCP and CPICH_Ec/No is established in a specified radio service area and by cruising through the measurement route by a vehicle etc on which measuring instruments etc. are mounted, the CPICH_RSCP and CPICH_Ec/No values are each actually measured.

Next, the measured data of CPICH_RSCP and CPICH_Ec/No are loaded to radio wave propagation simulator to perform the radio wave propagation simulation of the relevant CPICH. Further, using the measured data, the area in which the communication quality is deteriorated is extracted. If the point where the communication quality is deteriorated is found, then the measured data in the relevant point are analyzed and the modification of the radio parameter settings of the radio base stations is investigated to improve the communication quality. Then, the values of the CPICH_RSCP and CPICH_Ec/No afer the modification of the radio parameter settings are estimated through the use of the radio wave propagation simulator and the effect of the radio area tuning is verified.

Finally, the radio parameter settings of the relevant radio base station are modified based on the above investigation and verification results and the modification results are reported.

For reference, the foregoing CPICH refers to a pilot channel transmitted continuously with a constant power from a radio base station, and the CPICH_RSCP refers to the received power (unit dBm) of a desired wave of the CPICH at any given point within a radio service area. Further, the CPICH_Ec/No refers to a received power density ratio within a band indicating the ratio of the received power of a desired wave of the CPICH (CPICH_RSCP) to the total received power (RSSI: Received Signal Strength Indicator, unit dBm) in the CPICH (CPICH_RSSI) concerned (i.e., RSCP/RSSI, unit dB). The communication quality is commonly estimated by the value of this CPICH_Ec/No.

An all-purpose area tester for measuring the above CPICH_RSCP, RSSI and CPICH_Ec/No and supplying the measured values is employed as a measuring instrument, provided with, for example, a GPS (Global Positioning System) to enable specifying the position of the measuring instrument.

In the present embodiment, it is enabled to investigate an improvement of the quality of the overall radio service area by improving the accuracy of the radio wave propagation simulator through the use of the measured data. For this end, measures required for realizing (1) improvement in accuracy of the radio wave propagation simulation, (2) improvement in an estimated accuracy of the CPICH_RSCP when modifying the radio parameter settings, and (3) improvement of an estimated accuracy of the CPICH_Ec/No when modifying the radio parameter settings will be proposed below.

### (1) Improvement in accuracy of the radio wave propagation simulation:

The radio wave propagation simulation is implemented through the use of a known propagation curve (for example, the Okumura curve/Hata), which is a mathematical expression of an attenuation characteristic of a radio wave represented on the basis of empirical values. In the present embodiment, the improvement in the accuracy of radio wave propagation simulation is attained by correcting the relevant propagation curve though the use of measured data so as to be applicable to the actual environment. Area-coefficient dependent correction values are used for the correction of the propagation curve, wherein the area-coefficient dependent correction values are obtained by integrating the differences between the propagation curve and the measured values of the CPICH-RSCP (more specifically, the measurement curve obtained by plotting the measured values of the CPICH_RSCP against the abscissa of the propagation curve) per unit length of the abscissa (moving-averaged correction value). The area-coefficient dependent correction values are calculated at predetermined angular intervals (for example, at two degree intervals) in all the orientations with respect to a radio base station and the propagation curve is corrected for every predetermined angle (orientation).

For reference, it is necessary to obtain a sufficient number of the measured data in each of all the orientations with respect to a radio base station to calculate the area-coefficient dependent correction values in order to improve the accuracy of the radio wave propagation simulation. In a CDMA mobile communication system, it is impossible to acquire received data at the points where predetermined values of CPICH_Ec/No are not assuredly obtainable, because the same carrier frequency is used in all of the cells. Ordinarily, while the measured data of any cell are collectable in the relevant cell, measured data in the back-beam direction, i.e., measured data of another cell are hardly collectable. Furthermore, when using the measured data arriving from the back beam direction, the calculated values of the area-coefficient dependent correction values significantly deviate from actual values, which deteriorates the accuracy of the area-coefficient dependent correction values. For this reason, the present embodiment calculates the area-coefficient dependent correction values not on a cell basis but on a radio-base-station basis. For example, suppose the case where a radio base station is provided for three cells A, B and C. In this case, transmission beams are sent in three directions from the radio base station and measured data for three cells can be collected. In this case, because the direction of the back beam in the A cell is the transmission directions in the other cells, there are hardly included the measured data of the A cell in the collected data. However, because there is a sufficiently great amount of the measured data of the other cells, the area-coefficient dependent correction values are calculated using the values of the measured data. In this way, the accuracy of the area-coefficient dependent correction value is improved by calculating the area-coefficient dependent correction value through the use of the measured data of the cell that supplies the greatest number of measured data values.

In the present embodiment, the radio wave propagation simulation is implemented using a propagation curve after performing correction on the basis of the above-described area-coefficient dependent correction values and further using a (propagation curve + measured data assigned with weights) model in which the measured data are assigned with weights. The weights assigned to the measured data are set designating the distance from a simulation point, where the radio wave propagation simulation is implemented, to the point where the measured data exist, etc. as a parameter, if the measured data exist in the neighborhood of the simulation point.

The radio area tuning is a technique not for designing a radio service area but for evaluate an actual field. Thus, it is enabled to improve an accuracy of the radio wave propagation simulation by means of the above-described method.

### (2) Improvement of an estimated accuracy of the CPICH_RSCP when modifying the radio parameter settings:

The radio parameters of a radio base station intended to be modified mainly includes an antenna tilt angle, a direction of an antenna and a transmission power. The antenna tilt angle in particular is an important radio parameter for improving a communication quality. When designing a mobile communication system, it is ordinary to use an antenna pattern without taking an antenna tilt angle into account. An actual antenna pattern, however, varies depending on the antenna tilt angle. In the present embodiment, an antenna pattern is prepared for each of a plurality of antenna tilt angles and the prepared pattern is used. Specifically, an antenna pattern for each of a plurality of antenna tilt angles is stored in advance in a radio wave propagation simulator and the variation of the antenna pattern attributed to the antenna tilt angle is applied to the process of estimating the CPICH_RSCP (the received power level), thereby improving the accuracy of the radio wave propagation simulation.

### (3) Improvement of an estimated accuracy of the CPICH_Ec/No when modifying the radio parameter settings:

As described above, the CPICH_Ec/No is the ratio of CPICH_RSCP to RSSI. Further, the RSSI is a value yielded by adding the thermal noise of the measuring instrument to the sum of received powers from cells. When no traffic is accommodated, the total received power is calculated from CPICH_RSCP and the number of channels, and further adding thermal noise of the measuring instrument to the total received power yields the theoretical RSSI. The measured value of RSSI, however, does not coincide with the theoretical value on account of a delay wave, which is not measured by the measuring instrument.

Although the total received power can be calculated on the basis of the number of transmission channels and channel types if no traffic is accommodated, it is impossible to calculate the number of the transmission channels and the total received power of the entire channels when any traffic is accommodated. While these values are not confirmed through the use of a measuring instrument, it is impossible to estimate the CPICH_Ec/No without any knowledge on these values.

In view of the above fact, it is intended in the present embodiment to take advantage that the CPICH_RSCP and the total receiving power vary at the same ratio and estimate the CPICH_Ec/No after modification of the radio parameter settings, according to the method described below.

First, the CPICH_Ec/No before modification of the radio parameter settings is calculated based on the CPICH_RSCP of all the incoming cells before the modification of the radio parameter settings and the noise of the measuring instrument. This calculated value, of course, differs from the measured value of the CPICH_Ec/No. Next, a similar calculation is also operated after the modification of the radio parameter settings to calculate the CPICH_Ec/No after the modification of the radio parameter settings. Further, by calculating the difference between the calculated values of the CPICH_Ec/No before and after the modification of the radio parameter settings, a relative value, which is a quantity to be revised through the modification of the radio parameter settings, is produced.

Finally, by adding the above relative value to the measured value of the CPICH_Ec/No, the CPICH_Ec/No after the modification of the radio parameter settings is estimated. The procedures described above are executed by the radio wave propagation simulator represented in Fig. 1.

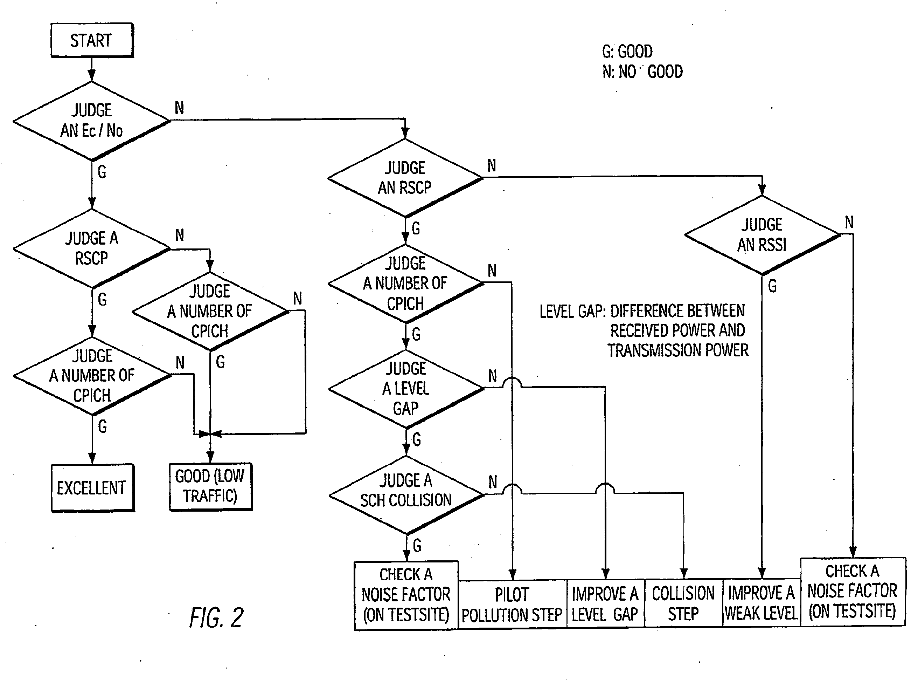

In the present embodiment, when an area of a deteriorated communication quality is extracted making use of measured data, on the other hand, the procedures of loading the measured data to the radio wave propagation simulator and performing the processing steps according to the flow chart shown in Fig. 2 are executed. The radio parameter settings are modified to adapt to the countermeasure required for the point decided to have a deteriorated quality through the processing steps shown in Fig. 2.

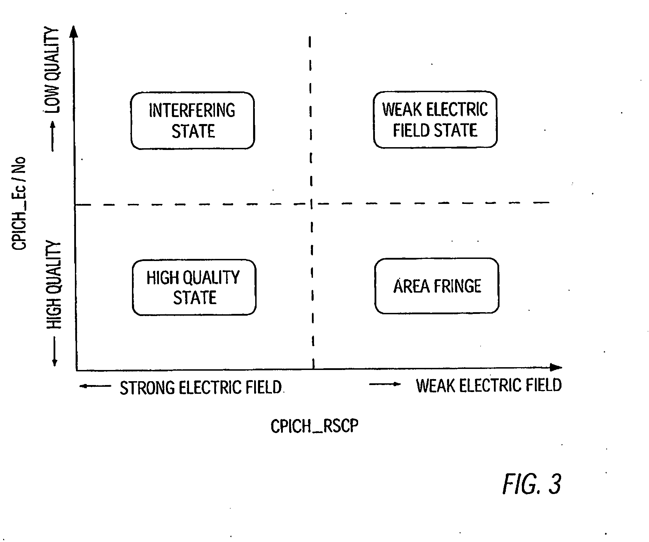

Furthermore, in the present embodiment, the whole radio service area is divided into four categories as shown in the distribution diagram of Fig. 3: The categories are determined in accordance with the values of CPICH_RSCP and CPICH_Ec/No. For reference, while Fig. 3 illustrates an example of the whole radio service area classified into four categories, the number of the categories is not limited to four and can be set to any number. Employing the distribution diagram like Fig. 3 enables easily grasping the degree of improvement of the overall radio service area before and after the modification of the radio parameter settings. In addition, the distribution diagram is usable for extracting the data at the point to be subject to the countermeasure and grasping the effect of the countermeasure.

As described above, in a CDMA mobile communication system, the communication quality is affected by the amount of interference to the relevant mobile station from other mobile stations. Consequently, when any of the radio parameter settings is modified, the CPICH_Ec/No is improved in some positions while deteriorated in other positions. If the improvement of the communication quality is investigated using the data measured only on a predetermined measurement route, then the prediction of the position of the deteriorated communication quality is limited to the measurement route, which entails difficulty in the radio area tuning that allows for the communication quality of the overall radio service area.

The present invention enables confirming the improvement and deterioration of the CPICH_Ec/No in the overall radio service area and also enables an appropriate radio area tuning. In addition, while the conventional measures did not allow the estimation of CPICH_Ec/No regardless of existence of traffic, the present invention enables the estimation properly. Furthermore, by verifying the modification results of the radio parameter settings through the use of the above distribution diagram, it become feasible easily to verify the effects of the radio area tuning. Still further, because the extraction of the deterioration area of the communication quality, the modification of the radio parameter settings, the verification of the effects of the radio area tuning, etc., which are the routine operations of the radio area tuning, can be performed by means of the radio wave propagation simulator, the operating efficiency of the radio area tuning is boosted.

While preferred embodiments of the present invention have been described using specific terms, such description is for illustrative purposes only, and it is to be understood that changes and variations may be made without departing from the scope of the following claims.

## Claims

1. A radio wave propagation simulator for simulating a state of propagation of a radio wave within a radio service area, **characterized by**:
an input section (17, 20) for receiving the measured data of a received power density ratio within a band in said radio service area and an amount of noise generated in a measuring instrument for measuring the received power density ratio within a band,
a processor section (10) that is adapted to:
store measured data of said received power density ratio within a band and said amount of noise of said measuring instrument in a storage device (12);
calculate a value of the received signal code power of a desired signal ;
modify radio parameter settings of said radio base station on the basis of the calculated value of the received signal code power of a desired signal and an amount of noise of said measuring instrument;
calculate total received power within said radio service area and the received power density ratio within a band before and after the modification of the radio parameter settings of said radio base station ;
calculate a relative value on the basis of the difference between the calculated values of the received power density ratio within a band before and after the modification of the radio parameter settings wherein said relative value refers to an amount improved by said modification of the radio parameter settings; and
estimate the received power density ratio within a band after the modification of the radio parameter settings by adding said relative value to the measured data of said received power density ratio within that band; and
an output section (30) that supplies as an output the processed results made by said processor section (10).

2. The radio wave propagation simulator according to claim 1, wherein
said processor section (10) classifies the overall said radio service area into a plurality of categories defined on the basis of the value of said received signal code power of a desired signal and the value of said received power density ratio within a band and makes a distribution diagram partitioned correspondingly to said categories, and
said output section (30) supplies as an output said distribution diagram made by said processor section (10).

## Patentansprüche

1. Funkwellenausbreitungssimulator zum Simulieren eines Ausbreitungszustands einer Funkwelle innerhalb eines Funkdienstbereichs, **gekennzeichnet durch**:
einen Eingabeabschnitt (17, 20) zum Empfang der gemessenen Daten eines Empfangsleistungsdichteverhältnisses innerhalb eines Bandes im Funkdienstbereich und eines in einem Messinstrument zur Messung des Empfangsleistungsdichteverhältnisses innerhalb eines Bandes erzeugten Rauschens,
einen Verarbeitungsabschnitt (10), der ausgelegt ist,
gemessene Daten des Empfangsleistungsdichteverhältnisses innerhalb eines Bandes und das Rauschen des Messinstrumentes in einer Speichervorrichtung (12) zu speichern;
einen Wert der Empfangssignalcodeleistung eines gewünschten Signals zu berechnen;
Funkparametereinstellungen der Funkbasisstation auf Basis des berechneten Wertes der Empfangssignalcodeleistung eines gewünschten Signals und eines Rauschens des Messinstruments zu ändern;
eine gesamte Empfangsleistung innerhalb des Funkdienstbereichs und das Empfangsleistungsdichteverhältnis innerhalb eines Bandes vor und nach der Änderung der Funkparametereinstellungen der Funkbasisstation zu berechnen;
einen relativen Wert auf Basis des Unterschieds zwischen den berechneten Werten des Empfangsleistungsdichteverhältnisses innerhalb eines Bandes vor und nach der Änderung der Funkparametereinstellungen zu berechnen, wobei der relative Wert eine Verbesserung aufgrund der Änderung der Funkparametereinstellungen betrifft; und
das Empfangsleistungsdichteverhältnis innerhalb eines Bandes nach der Änderung der Funkparametereinstellungen schätzt **durch** Hinzufügen des relativen Werts zu den gemessenen Daten des Empfangsleistungsdichteverhältnisses innerhalb des Bandes; und
einen Ausgabeabschnitt (30), der als Ausgabe die von dem Verarbeitungsabschnitt (10) erzeugten, verarbeiteten Ergebnisse liefert.

2. Funkwellenausbreitungssimulator nach Anspruch 1, wobei
der Verarbeitungsabschnitt (10) den gesamten Funkdienstbereich in eine Mehrzahl von Kategorien einteilt, festgelegt auf Basis des Wertes der Empfangssignalcodeleistung eines gewünschten Signals und des Wertes des Empfangsleistungsdichteverhältnisses innerhalb eines Bandes, und ein entsprechend der Kategorien aufgeteiltes Verteilungsdiagramm erstellt, und
der Ausgabeabschnitt (30) als Ausgabe das von dem Verarbeitungsabschnitt (10) erzeugte Verteilungsdiagramm liefert.

## Revendications

1. Simulateur de propagation d'onde radio pour simuler un état de propagation d'une onde radio à l'intérieur d'une zone de desserte radio, **caractérisé par** :
une section d'entrée (17, 20) pour recevoir les données mesurées d'un taux de densité de puissance reçue à l'intérieur d'une bande dans ladite zone de desserte radio et d'une quantité de bruits générés dans un instrument de mesure pour mesurer le taux de densité de puissance reçue à l'intérieur d'une bande,
une section de processeur (10) qui est apte à :
- stocker les données mesurées dudit taux de densité de puissance reçue à l'intérieur d'une bande et ladite quantité de bruits dudit instrument de mesure dans un dispositif de stockage (12) ;
- calculer une valeur de la puissance reçue de code de signal d'un signal souhaité ;
- modifier des réglages de paramètres radio de ladite station de base radio sur la base de la valeur calculée de la puissance reçue de code de signal d'un signal souhaité et d'une quantité de bruits dudit instrument de mesure ;
- calculer une puissance reçue totale à l'intérieur de ladite zone de desserte radio et le taux de densité de puissance reçue à l'intérieur d'une bande avant et après la modification des réglages de paramètres radio de ladite station de base radio ;
- calculer une valeur relative sur la base de la différence entre les valeurs calculées du taux de densité de puissance reçue à l'intérieur d'une bande avant et après la modification des réglages de paramètres radio, dans lequel ladite valeur relative fait référence à une quantité améliorée par ladite modification des réglages de paramètres radio ; et
- estimer le taux de densité de puissance reçue à l'intérieur d'une bande après la modification des réglages de paramètres radio en ajoutant ladite valeur relative aux données mesurées dudit taux de densité de puissance reçue à l'intérieur de cette bande ; et
une section de sortie (30) qui fournit, en tant que sortie, les résultats de traitement par ladite section de processeur (10).

2. Simulateur de propagation d'onde radio selon la revendication 1, dans lequel
ladite section de processeur (10) classifie ladite zone de desserte radio globale en une pluralité de catégories définies sur la base de la valeur de ladite puissance de code de signal reçue d'un signal souhaité et de la valeur dudit taux de densité de puissance reçue à l'intérieur d'une bande et effectue un diagramme de distribution partitionné en correspondance avec lesdites catégories, et
ladite section de sortie (30) fournit, en tant que sortie, ledit diagramme de distribution effectué par ladite section de processeur (10).
